# EUROPEAN PATENT APPLICATION

(11) **EP 4 037 282 A1**
(43) Date of publication of application: **03.08.2022**
(21) Application number: 21154447.3
(22) Date of filing: 29.01.2021
(51) Int. Cl.: H04L 29/08

(54) **STREAMING SYSTEM FOR ARTIFICIAL INTERNET OF THINGS AND METHOD THEREOF**

(71) Applicant: Mitac Information Technology Corp., Taipei City 114 (TW)
(72) Inventor: TENG, WEN YEN, 114 Taipei City (TW)
(74) Representative: Lang, Christian

(57) **Abstract**

A streaming system for artificial internet of things and a method thereof are disclosed. In the streaming system and method, raw sensor data is received through the edge device gateway and stored to a direct memory queue, and a sampling engine samples the received raw sensor data to generate corresponding a sampling value, and stores the sampling value to a NoSQL, and a summation engine performs summation on the sampling value to generate a corresponding summation value and stores the summation value in a relational database, so as to achieve the technical effect of improving reaction efficiency of AloT streaming.

## Description

### BACKGROUND OF THE INVENTION

### 1. Field of the Invention

The present invention relates to a streaming system and a method thereof, and more particularly to a streaming system for artificial internet of things and a method thereof.

### 2. Description of the Related Art

In recent years, with the popularity and vigorous development of artificial intelligence, it is common to combine artificial intelligence with other technical fields. The combination of artificial intelligence and the internet of things is called artificial internet of things (AloT), and using continuous accumulation and evolution of data to provide smarter services or experiences has become one of the most eye-catching combinations.

Generally speaking, many sensors are disposed in the conventional IoT, and each sensor transmits real-time streaming data, so that a remote server can analyze, determine or process the streaming data transmitted by each sensor. The combination of loT with artificial intelligence is to transmit the streaming data to the artificial intelligence model that has been trained, to provide more precise determination. However, when the number of sensors becomes more, the amount of data to be transmitted becomes more, and it may cause system resources (such as storage space, bandwidth, etc.) to be easily overwhelmed and cause network latency to be greatly increased, and these issues result in a problem of poor reaction efficiency.

Some manufacturers have proposed edge computing or fog computing to reduce network latency. However, even technical solutions of the edge computing and the fog computing are used, if the system resources cannot be fully utilized, the system is still overloaded and unable to effectively process the streaming data, and the conventional problem of poor reaction efficiency of AloT streaming is still not effectively solved.

Therefore, what is needed is to develop an improved technical solution to solve the problem of poor reaction efficiency of the AloT streaming.

### SUMMARY OF THE INVENTION

In order to solve the conventional technical problems, the present invention discloses a streaming system for artificial internet of things (AloT) and a method thereof.

According to an embodiment, the present invention provides a streaming system for artificial internet of things, and the streaming system include a data collecting module, a data sampling module and a data summation module. The data collecting module is configured to receive raw sensor data from at least one edge device through an edge device gateway, and store the received raw sensor data in a direct memory queue, and generate and transmit a data arrival signal. The data sampling module is connected to the data collecting module and configured to provide a sampling engine. When the sampling engine receives the data arrival signal, the data sampling module loads a sampling cycle from a sampling configuration, select at least one of the raw sensor data from the direct memory queue, and sample the selected raw sensor data to generate a corresponding sampling value based on time and the sampling cycle, and store the generated sampling value to a NoSQL (or called a NoSQL database). The data summation module is connected to the data sampling module and configured to continuously trigger a summation engine to load at least one summation configuration to be processed based on a time interval, and load all of the sampling values within a summation interval from the NoSQL based on the loaded at least one summation configuration one by one, and perform summation on the loaded sampling values to generate a corresponding summation value, and store the summation value to a relational database.

According to an embodiment, the present invention provides a streaming method for artificial internet of things, and the streaming method includes following steps: providing a direct memory queue, a NoSQL and a relational database; receiving a raw sensor data from at least one edge device through an edge device gateway, and storing the received raw sensor data in a direct memory queue, and generating and transmitting a data arrival signal, transmit to a sampling engine; when the sampling engine receives the data arrival signal, loading a sampling cycle from a sampling configuration, and selecting at least one piece of the raw sensor data and sampling the selected raw sensor data to generate a corresponding sampling value based on time and the sampling cycle, and storing the generated sampling value to the NoSQL; continuously triggering a summation engine to load at least one summation configuration according to a time interval, and loading all of the sampling values within a summation interval from the NoSQL based on the loaded at least one summation configuration one by one, and performing summation on the loaded sampling values to generate a corresponding summation value, and storing the summation value to the relational database.

According to above-mentioned contents, the difference between the system and method of the present invention and the conventional technology is that in the system and the method of the present invention the raw sensor data is received through the edge device gateway and stored in a direct memory queue, the sampling engine samples the raw sensor data to generate the corresponding sampling value and store the sampling value in the NoSQL, the summation engine performs summation on the sampling values to generate the corresponding summation value and stores the summation value in the relational database, so as to achieve the technical effect of improving reaction efficiency of the AloT streaming.

Therefore, the technical solution of the present invention is able to achieve the technical effect of improving the reaction efficiency of the AloT streaming.

### BRIEF DESCRIPTION OF THE DRAWINGS

The structure, operating principle and effects of the present invention will be described in detail by way of various embodiments which are illustrated in the accompanying drawings.
FIG. 1 is a system block diagram of a streaming system for artificial internet of things, according to the present invention.
FIG. 2 is a flowchart of a streaming method for artificial internet of things, according to the present invention.
FIG. 3 is a schematic view showing an operation of performing sampling and summation on the loT streaming data, according to the present invention.
FIGS. 4A and 4B are timing diagrams of a sampling operation, according to the present invention.
FIG. 5 is a timing diagram of a summation operation, according to the present invention.

### DETAILED DESCRIPTION OF THE PREFERRED EMBODIMENTS

The following embodiments of the present invention are herein described in detail with reference to the accompanying drawings. These drawings show specific examples of the embodiments of the present invention. These embodiments are provided so that this disclosure will be thorough and complete, and will fully convey the scope of the invention to those skilled in the art. It is to be acknowledged that these embodiments are exemplary implementations and are not to be construed as limiting the scope of the present invention in any way. Further modifications to the disclosed embodiments, as well as other embodiments, are also included within the scope of the appended claims.

These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts. As used herein, the singular forms "a", "an" and "the" are intended to include the plural forms as well, unless the context clearly indicates otherwise.

It is to be acknowledged that, although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present disclosure. As used herein, the term "or" includes any and all combinations of one or more of the associated listed items.

It will be acknowledged that when an element or layer is referred to as being "on," "connected to" or "coupled to" another element or layer, it can be directly on, connected or coupled to the other element or layer, or intervening elements or layers may be present. In contrast, when an element is referred to as being "directly on," "directly connected to" or "directly coupled to" another element or layer, there are no intervening elements or layers present.

In addition, unless explicitly described to the contrary, the words "comprise" and "include", and variations such as "comprises", "comprising", "includes", or "including", will be acknowledged to imply the inclusion of stated elements but not the exclusion of any other elements.

The operations of the system and method of the present invention will be illustrated in detail with reference to the accompanying drawings and embodiments in following paragraphs, so that. so that the implementation process of applying the technical solution of the present invention to solve technical problem to achieve technical effect will be readily apparent as the same becomes better understood for implementation,

First of all, the application environment of the present invention is described before the illustration of the streaming system for artificial internet of things and a method thereof of the present invention. The present invention can be applied in loT environment and provides three different storage entities including a direct memory queue, a NoSQL and a relational database. The direct memory queue is configured to temporarily store raw sensor data transmitted from an edge device in streaming, for further sampling operation. The NoSQL and the relational database are used for backup, the NoSQL stores sampling values, and the relational database stores summation values for sequential analysis and reporting; in other words, the NoSQL and the relational database are not involved in the streaming data processing.

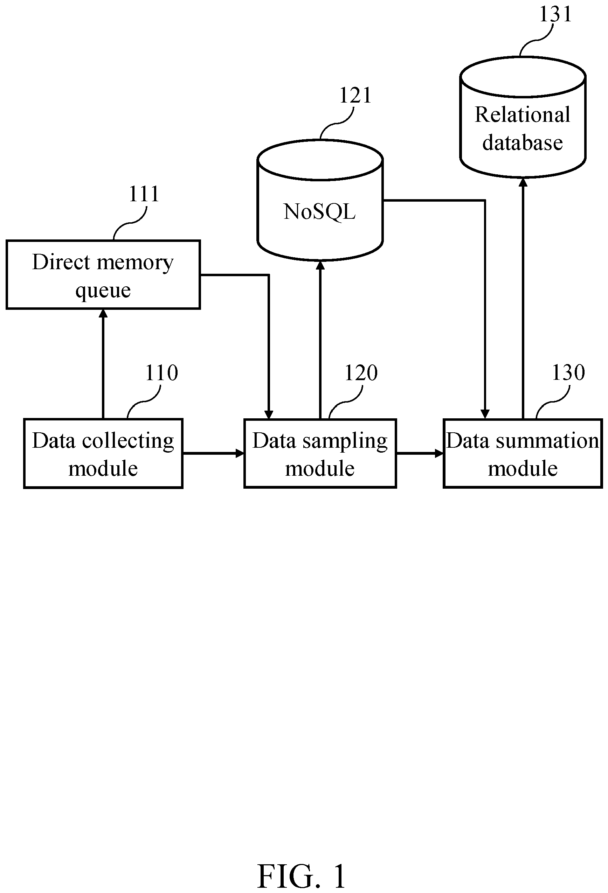

The streaming system for artificial internet of things and a method thereof of the present invention will hereinafter be described in more detail with reference to the accompanying drawings. Please refer to FIG. 1, which is a system block diagram of a streaming system for artificial internet of things, according to the present invention. The streaming system includes a data collecting module 110, a data sampling module 120, and a data summation module 130. The data collecting module 110 is configured to receive raw sensor data from an edge device through an edge device gateway, and store the received raw sensor data in a direct memory queue 111, and generate and transmit a data arrival signal. In actual implementation, the direct memory queue 111 can be implemented by volatile memory or other similar memory. Furthermore, the data collecting module 110 can continuously detect the received raw sensor data, and when there is no change in the raw sensor data, the data collecting module 110 only retain one piece of the raw sensor data which is necessary for sampling operation, and discard other the same pieces of the raw sensor data, so as to save storage space.

The data sampling module 120 is connected to the data collecting module 110, and configured to provide a sampling engine, and when the sampling engine receives the data arrival signal, the sampling engine loads a sampling cycle from a sampling configuration, and select at least one of the raw sensor data from the direct memory queue 111 based on time and the sampling cycle, and the sampling engine then samples the selected raw sensor data to generate at least one corresponding sampling value, store the generated sampling value to a NoSQL 121. In actual implementation, when multiple pieces of raw sensor data are selected, a sampling script can be executed to generate corresponding sampling value one by one. The raw sensor data can be received through wired network or wireless network. For example, the wired network can be implemented by coaxial cable, fiber, dual twisted wire or the like; transmission medium of the wireless network can be implemented by radio wave, microwave, infrared, laser or the like, and data and signal are transmitted through Wi-Fi and ZigBee, constrained application protocol (CoAP), or similar wireless transmission protocol.

The data summation module 130 is connected to the data sampling module 120, and configured to continuously trigger a summation engine to load at least one summation configuration, which is to be processed, based on a time interval, and load all of the sampling values within a summation interval from the NoSQL 121 based on the loaded summation configuration one by one, and execute a summation script to perform summation on the loaded sampling value to generate summation value, and store the summation value in a relational database 131. In actual implementation, the sampling script and the summation script are executed by a script engine, which is an execution engine providing MVFLEX Expression Language (MVEL) syntax.

It is to be particularly noted that, in actual implementation, the modules of the present invention can be implemented by various manners, including software, hardware or any combination thereof, for example, in an embodiment, the module can be implemented by software and hardware, or one of software and hardware. Furthermore, the present invention can be implemented fully or partly based on hardware, for example, one or more module of the system can be implemented by integrated circuit chip, system on chip (SOC), a complex programmable logic device (CPLD), or a field programmable gate array (FPGA). The concept of the present invention can be implemented by a system, a method and/or a computer program. The computer program can include computer-readable storage medium which records computer readable program instructions, and the processor can execute the computer readable program instructions to implement concepts of the present invention. The computer-readable storage medium can be a tangible apparatus for holding and storing the instructions executable of an instruction executing apparatus Computer-readable storage medium can be, but not limited to electronic storage apparatus, magnetic storage apparatus, optical storage apparatus, electromagnetic storage apparatus, semiconductor storage apparatus, or any appropriate combination thereof. More particularly, the computer-readable storage medium can include a hard disk, a RAM memory, a read-only-memory, a flash memory, an optical disk, a floppy disc or any appropriate combination thereof, but this exemplary list is not an exhaustive list. The computer-readable storage medium is not interpreted as the instantaneous signal such a radio wave or other freely propagating electromagnetic wave, or electromagnetic wave propagated through waveguide, or other transmission medium (such as optical signal transmitted through fiber cable), or electric signal transmitted through electric wire. Furthermore, the computer readable program instruction can be downloaded from the computer-readable storage medium to each calculating/processing apparatus, or downloaded through network, such as internet network, local area network, wide area network and/or wireless network, to external computer equipment or external storage apparatus. The network includes copper transmission cable, fiber transmission, wireless transmission, router, firewall, switch, hub and/or gateway. The network card or network interface of each calculating/processing apparatus can receive the computer readable program instructions from network, and forward the computer readable program instruction to store in computer-readable storage medium of each calculating/processing apparatus. The computer program instructions for executing the operation of the present invention can include source code or object code programmed by assembly language instructions, instruction-set-structure instructions, machine instructions, machine-related instructions, micro instructions, firmware instructions or any combination of one or more programming language. The programming language include object oriented programming language, such as Common Lisp, Python, C++, Objective-C, Smalltalk, Delphi, Java, Swift, C#, Perl, Ruby, and PHP, or regular procedural programming language such as C language or similar programming language. The computer readable program instruction can be fully or partially executed in a computer, or executed as independent software, or partially executed in the client-end computer and partially executed in a remote computer, or fully executed in a remote computer or a server.

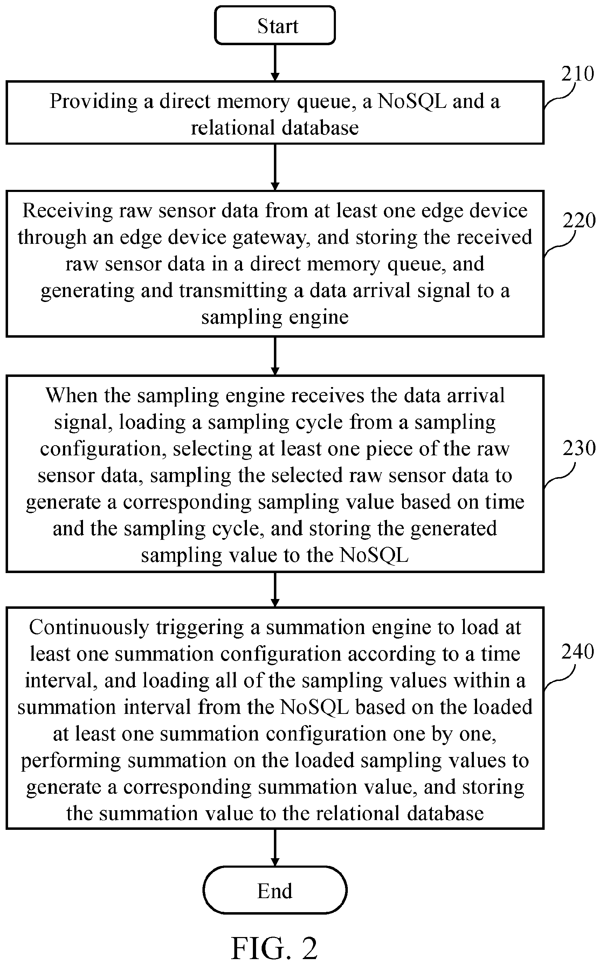

Please refer to FIG. 2, which is a flowchart of a streaming method for artificial internet of things, according to the present invention. As shown in FIG. 2, the streaming method includes following steps. In a step 210, the direct memory queue 111, the NoSQL 121, and the relational database 131 are provided. In a step 220, raw sensor data is received from edge device through an edge device gateway, and the received raw sensor data is stored in the direct memory queue 111, and a data arrival signal is generated and transmitted to the sampling engine. In a step 230, when the sampling engine receives the data arrival signal, the sampling cycle is loaded from a sampling configuration, at least one of the pieces of the raw sensor data is selected and the selected raw sensor data is sample to generate the corresponding sampling value, and the generated sampling value is stored in the NoSQL 121. In a step 240, the summation engine is continuously triggered to load at least one summation configuration which should be processed, based on a time interval, and loads all of the sampling values within the summation interval from the NoSQL 121 based on the summation configuration one by one, and performs summation on the loaded sampling value to generate the summation value, and stores the summation value in the relational database 131. Through aforementioned steps, the raw sensor data can be received through the edge device gateway, and the raw sensor data can be stored in the direct memory queue 111, the sampling engine can sample the raw sensor data to generate the corresponding sampling value, and store the sampling value to the NoSQL 121, and the summation engine can perform summation on the sampling values to generate the corresponding summation value and store the summation value in the relational database 131, so as to achieve the technical effect of improving reaction efficiency of the AloT streaming. In an embodiment, the streaming method can include a step of continuously detecting the received raw sensor data, and when there is no change in the received raw sensor data, retaining one piece of the raw sensor data and discarding other the same pieces of the raw sensor data.

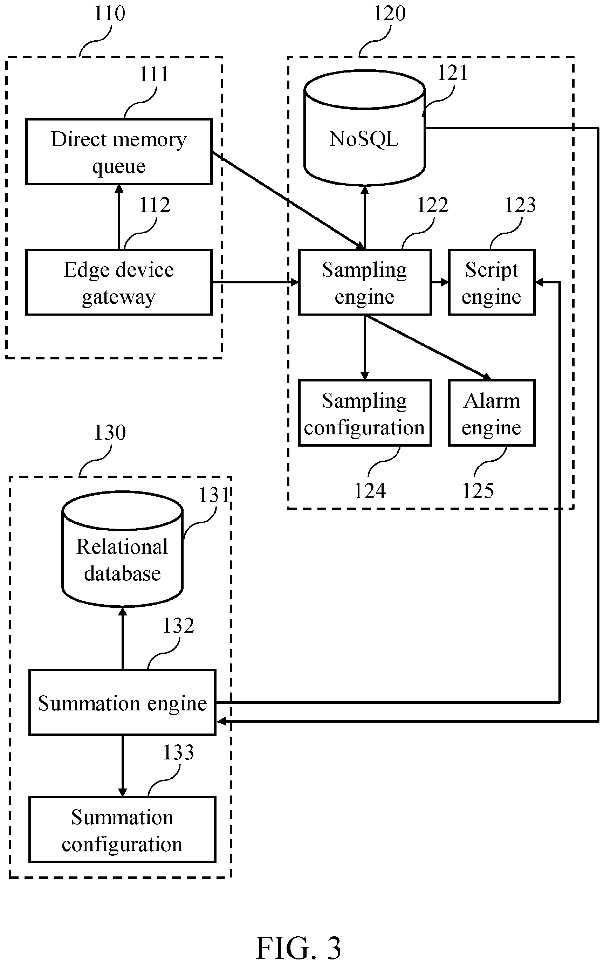

The embodiment of the present invention is described with reference to FIGS. 3 to 5 in the following paragraphs. Please refer to FIG. 3, which is a schematic view showing an operation of performing sampling operation and summation on loT streaming, according to the present invention. In actual implementation, the direct memory queue 111 can be regarded as a part of the data collecting module 110, the NoSQL 121 can be regarded as a part of the data sampling module 120, and the relational database 131 can be regarded as a part of the data summation module 130. Numerous edge devices are disposed in loT environment, and each edge device can continuously and actively transmit raw sensor data to the edge device gateway 112, and the data collecting module 110 can store the raw sensor data in the direct memory queue 111, and generate and transmit the data arrival signal to the sampling engine 122, so as to notify the data sampling module 120 to start sampling operation. In other words, through the edge device gateway 112, the data collecting module 110 collects the data actively transmitted from the edge device, and the transmitted data is raw sensor data, and the edge device gateway 112 can be regarded as the entrance of the edge device. In order to effectively reduce reaction time, the raw sensor data are stored in the direct memory queue 111. The raw sensor data includes important parameters, such as transmission cycle which is in a unit of millisecond (ms) and configured to record how often the sensor transmits data; when the value of the transmission cycle is not set, the time interval for receiving the raw sensor data can be used as the basis of estimating the transmission cycle.

When the sampling engine 122 receives the data arrival signal, the data sampling module 120 checks sampling setting parameters (such as the sampling cycle) set in the sampling configuration 124, to determine how to sample the raw sensor data. For example, when value of the sampling cycle is set as zero, it indicates that the raw sensor data is to be sampled once every time when the raw sensor data is streaming into the sampling engine, and this sampling cycle can be applied to sample an indoor temperature, an indoor humidity, an indoor oxygen level in real time. When the value of the sampling cycle is set to be greater than zero, it indicates that the sensor data within the sampling cycle are sampled when time interval meets the sampling cycle, and this sampling cycle can be applied to sample electricity consumption value per minute or other similar situations. In actual application, during the sampling process, the data sampling module 120 samples the raw sensor data, which is temporarily stored in the direct memory queue 111, based on the sampling configuration 124, to generate the corresponding sampling values and store the sampling values in the NoSQL 121. The sampling configuration 124 defines the configuration about how to sample the raw sensor data, and the sampling configuration 124 can include important parameters, such as a sampling cycle, a maximum sampling times and a sampling equation. The sampling cycle can be in a unit of millisecond (ms) and define how often to sample, and when the value of the sampling cycle is zero, it indicates that the raw sensor data is to be sampled once every time when the raw sensor data is streaming into the sampling engine, and when the value of the sampling cycle is set to be greater than zero, it indicates that the raw sensor data within the sampling cycle are sampled when time interval meets the sampling cycle. The maximum sampling times defines a maximum times of sampling at the sampling cycle, for example, in a condition that the sampling cycle is 5 minutes and the maximum sampling times is a value of 12, it indicates that the raw sensor data is to be sampled by 12 times at most within 5 minutes. In actual implementation, the sampling equation is configured to calculate the maximum value, the minimum value, the count and the average of the sampling values, and when the sampling equation is not defined in sampling configuration 124, the maximum value, the maximum value, the minimum value, the count and the average can be determined by the script executed by a script engine 123. Furthermore, the sampling value is transmitted to an alarm engine 125 by a digital twin manner, so that the alarm engine 125 can determine whether to output an alarm message, for example, the alarm message can be transmitted to notify the administrator through email, short message service (SMS) or instant messaging (IM) message; in an embodiment, a speaker or a display device can be triggered to broadcast or display the alarm message.

Next, the data summation module 130 performs summation on the stored sampling values based on the summation configuration, to generate and store the summation value to the relational database. In actual implementation, the summation engine 132 is used to generate the summation value based on a summation configuration 133, and the summation configuration 133 defines a configuration for summation of the sampling value. During the summation process, the summation can be performed based on a constant time interval, such as 5 minutes, 10 minute, 15 minutes, 30 minutes or 60 minutes, and the summation values include a maximum value (Max), a minimum value (Min), an average, a count and a sum of the sampling values within the time interval.

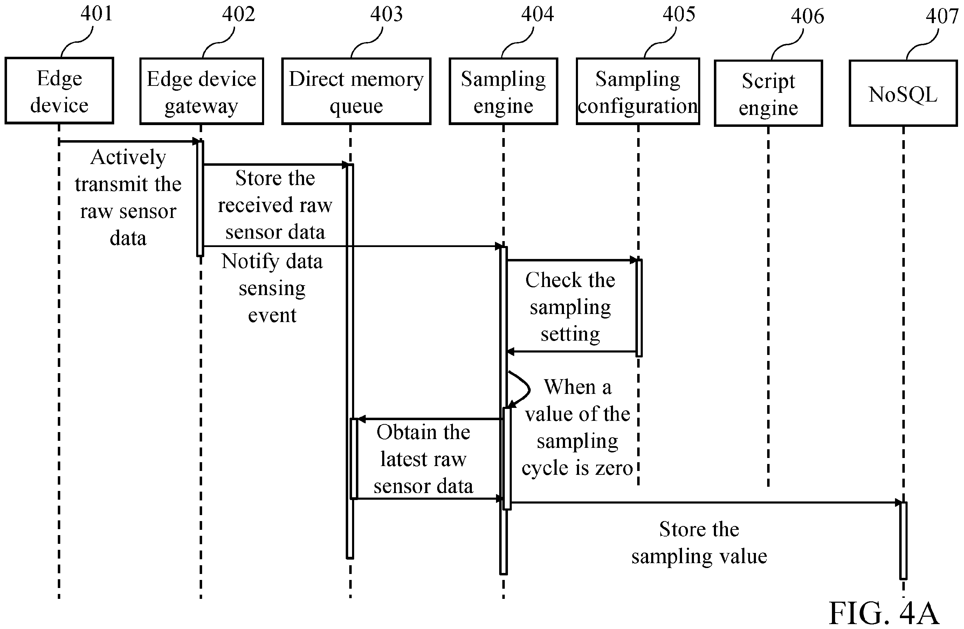

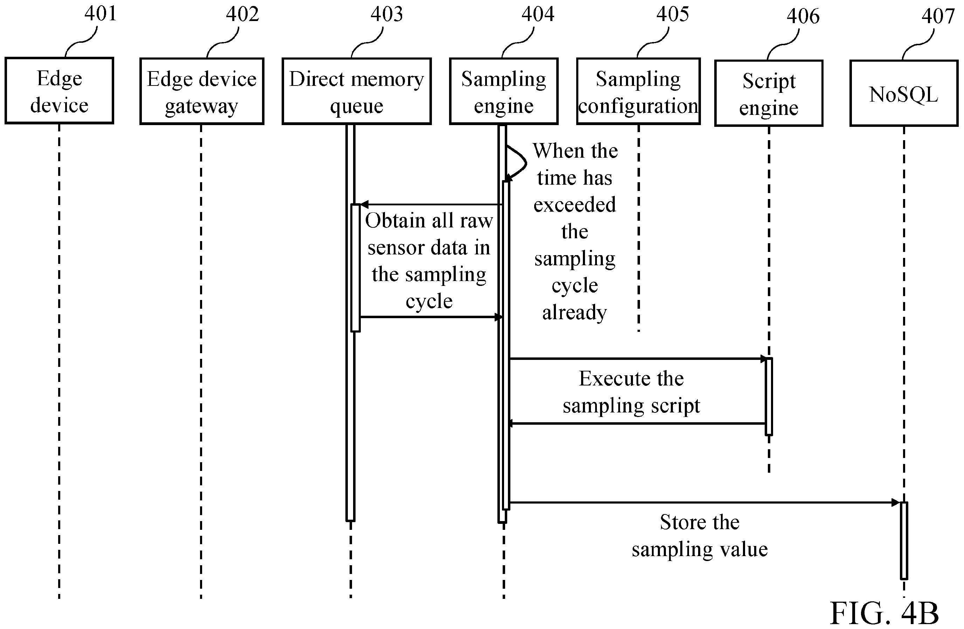

As shown in FIGS. 4A and 4B, which are timing diagrams of a sampling operation, according to the present invention. As shown in FIG. 4A, an edge device 401 actively transmits the raw sensor data to an edge device gateway 402 of the data collecting module 110, and the data collecting module 110 stores the received raw sensor data to a direct memory queue 403. Next, the data collecting module 110 generates the data arrival signal to notify the sampling engine 404 to start the sampling process, and the sampling engine 404 checks the sampling setting parameters (such as the parameter setting for the sampling cycle) recorded in the sampling configuration 405, and when the value of the sampling cycle is set as 0, the latest raw sensor data stored from the direct memory queue 403 is accessed and sampled to generate the corresponding sampling value, and the generated sampling value is stored to a NoSQL 407. When the time has exceeded the sampling cycle already, as shown in FIG. 4B, all pieces of the raw sensor data stored in the direct memory queue 403 within the sampling cycle are accessed and transmitted to a script engine 406, and the script engine 406 executes the sampling script to generate corresponding sampling values, and the sampling engine 404 then stores the generated sampling value to the NoSQL 407.

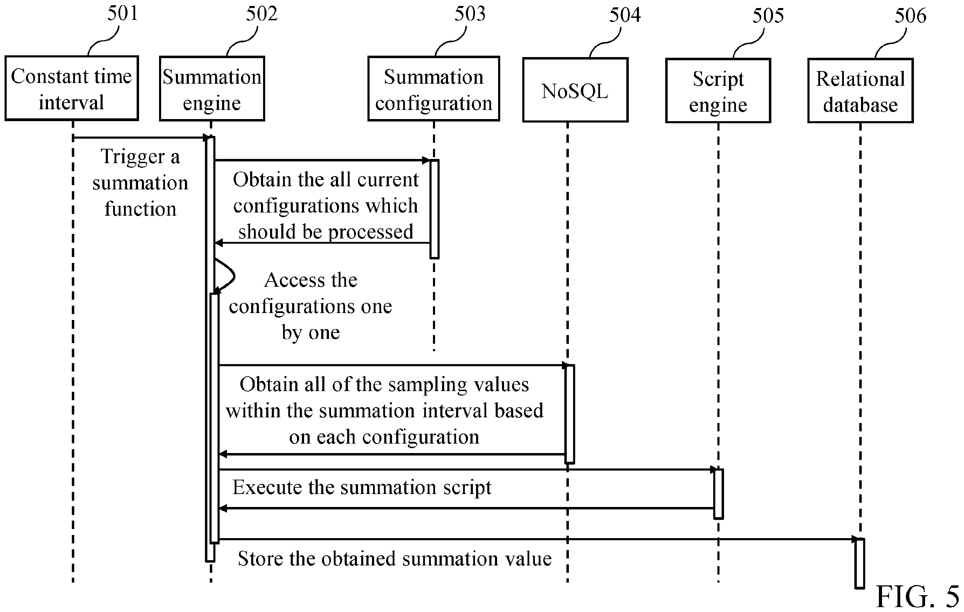

As shown in FIG. 5, which is a timing diagram of a summation operation according to the present invention. In a condition that a constant time interval 501 (or called a summation interval) is set as 5 minutes, a summation function is triggered per 5 minutes, to make the summation engine 502 obtain the all current summation configurations 503 which should be processed, and access the summation configurations 503 one by one and obtain all of the sampling values within the summation interval from the NoSQL 504, based on each summation configuration 503. After a script engine 505 executes the summation script and a summation engine 502 obtains the corresponding summation values, the summation engine 502 stores the obtained summation value in a relational database 506.

According to above-mentioned contents, the difference between the system and method of the present invention and the conventional technology is that in the system and the method of the present invention the raw sensor data is received through the edge device gateway and stored in a direct memory queue, the sampling engine samples the raw sensor data to generate the corresponding sampling value and store the sampling value in the NoSQL, the summation engine performs summation on the sampling values to generate the corresponding summation value and stores the summation value in the relational database. The technical solution of the present invention can solve the conventional technical problem, to achieve the technical effect of improving reaction efficiency of the AloT streaming.

The present invention disclosed herein has been described by means of specific embodiments. However, numerous modifications, variations and enhancements can be made thereto by those skilled in the art without departing from the spirit and scope of the disclosure set forth in the claims.

## Claims

1. A streaming system for artificial internet of things, comprising:
a data collecting module, configured to receive raw sensor data from at least one edge device through an edge device gateway, and store the received raw sensor data in a direct memory queue, and generate and transmit a data arrival signal;
a data sampling module, connected to the data collecting module and configured to provide a sampling engine, wherein when the sampling engine receives the data arrival signal, the data sampling module loads a sampling cycle from a sampling configuration, select at least one piece of the raw sensor data from the direct memory queue, and sample the selected raw sensor data to generate a corresponding sampling value based on time and the sampling cycle, and store the generated sampling value to a NoSQL; and
a data summation module, connected to the data sampling module and configured to continuously trigger a summation engine to load at least one summation configuration to be processed based on a time interval, and load all of the sampling values within a summation interval from the NoSQL based on the loaded at least one summation configuration one by one, and perform summation on the loaded sampling values to generate a corresponding summation value, and store the summation value to a relational database.

2. The streaming system for artificial internet of things according to claim 1, wherein the sampling configuration comprises a sampling cycle, a maximum sampling times, and a sampling equation, and when the sampling cycle is zero, the selected raw sensor data is sampled once every time when the raw sensor data is streaming into the sampling engine, and when the sampling cycle is greater than zero, the selected raw sensor data within the sampling cycle are sampled when time interval meets the sampling cycle, the maximum sampling times is configured to set a maximum times of sampling at the sampling cycle, the sampling equation is configured to calculate a maximum value, a minimum value, a count and an average of the sampling values.

3. The streaming system for artificial internet of things according to claim 1, wherein the data sampling module comprises an alarm engine, and when the sampling value is transmitted to the alarm engine by a digital twin manner, the alarm engine determines whether to output an alarm message based on the sampling value.

4. The streaming system for artificial internet of things according to claim 3, wherein the alarm message is outputted to a remote end through email, short message service (SMS) or instant messaging (IM) message, or a speaker or a display device is triggered to broadcast or display the alarm message.

5. The streaming system for artificial internet of things according to claim 1, wherein the data collecting module continuously detects the received raw sensor data, and when there is no change in the received raw sensor data, the data collecting module retains one piece of the received raw sensor data, and discard other the same pieces of the received raw sensor data.

6. A streaming method for artificial internet of things, comprising:
providing a direct memory queue, a NoSQL and a relational database;
receiving raw sensor data from at least one edge device through an edge device gateway, and storing the received raw sensor data in a direct memory queue, and generating and transmitting a data arrival signal to a sampling engine;
when the sampling engine receives the data arrival signal, loading a sampling cycle from a sampling configuration, selecting at least one piece of the raw sensor data, sampling the selected raw sensor data to generate a corresponding sampling value based on time and the sampling cycle, and storing the generated sampling value to the NoSQL; and
continuously triggering a summation engine to load at least one summation configuration according to a time interval, and loading all of the sampling values within a summation interval from the NoSQL based on the loaded at least one summation configuration one by one, performing summation on the loaded sampling values to generate a corresponding summation value, and storing the summation value to the relational database.

7. The streaming method for artificial internet of things according to claim 6, wherein the sampling configuration comprises the sampling cycle, a maximum sampling times, and a sampling equation, and when the sampling cycle is zero, the selected raw sensor data is sampled once every time when the raw sensor data is streaming into the sampling engine, and when the sampling cycle is greater than zero, the selected raw sensor data within the sampling cycle are sampled when time interval meets the sampling cycle, the maximum sampling times is configured to set a maximum times of sampling at the sampling cycle, the sampling equation is configured to calculate a maximum value, a minimum value, a count and an average of the sampling values.

8. The streaming method for artificial internet of things according to claim 6, wherein when the sampling value are transmitted to the alarm engine by a digital twin manner, the alarm engine determines whether to output an alarm message based on the sampling value.

9. The streaming method for artificial internet of things according to claim 8, wherein the alarm message is outputted to a remote end through email, short message service (SMS) or instant messaging (IM) message, or a speaker or a display device is triggered to broadcast or display the alarm message.

10. The streaming method for artificial internet of things according to claim 6, further comprising:
continuously detecting the received raw sensor data, and when there is no change in the received raw sensor data, retaining one piece of the raw sensor data and discarding other the same pieces of the raw sensor data.
